# EUROPÄISCHE PATENTSCHRIFT

(11) **EP 0 544 058 B1**
(45) Veröffentlichungstag und Bekanntmachung des Hinweises auf die Patenterteilung: **22.04.1998**
(21) Anmeldenummer: 92112995.3
(22) Anmeldetag: 30.07.1992
(51) Int. Cl.: C11D 7/22, C11D 7/26, C08G 85/00, C11D 3/37, C09D 9/00

(54) **Reinigungsmittelzusammensetzung**
Cleaning composition
Composition de nettoyage

(30) Priorität: 27.11.1991 DE 9114780 U
(43) Veröffentlichungstag der Anmeldung: 02.06.1993
(73) Patentinhaber: H.B. FULLER LICENSING & FINANCING, INC., Saint Paul, Minnesota 55110-5132 (US)
(72) Erfinder: Maitz, Franz, W-8026 Bruckmuehl (DE)
(74) Vertreter: Maiwald, Walter, Dr. Dipl.-Chem.

(56) Entgegenhaltungen:
- EP-A- 0 344 681
- BE-A- 660 955
- DD-A- 72 964
- DD-B- 154 446
- DE-A- 2 819 577

## Beschreibung

Die Erfindung betrifft ein Reinigungscompound zur Entfernung von reaktiven Polyurethan (PUR)- Schmelzklebstoffen aus Herstellungs- und Verarbeitungsgeräten, -maschinen und -anlagen, insbesondere Auftragsapparaturen und dergleichen.

Bekannte Reinigungscompounds sind mit dem Schmelzklebstoff chemisch nicht reagierende Massen, die in der zu reinigenden Apparatur sich mit den zu entfernenden Klebstoffresten mischen, diese nur verdünnen und verdrängen.

Ein bekanntes solches Reinigungscompound besteht aus einem Gemisch eines EVA-Polymeren mit einer Harzkomponente. Das EVA-Polymere ist nicht gut mit üblichen PUR-Schmelzklebstoffen mischbar. Außerdem reagiert der Schmelzklebstoff infolge seiner noch reaktiven NCO-Funktionalität in der Mischung weiter zu vernetzten Produkten, die sich nur sehr schwer entfernen lassen, da sie unschmelzbar und im Compound im wesentlichen unlösbar sind und sich ablagern.

Als Alternative wurden Compounds diskutiert (unveröffentliche Mitteilung), die durch überschußfreie Zugabe eines monofunktionellen Alkohols zu einem reaktiven Schmelzklebstoff erhalten werden, wobei die noch vorhandenen reaktiven NCO-Gruppen des PUR-Schmelzklebstoffes durch die Hydroxylgruppen des monofunktionellen Alkohols stöchiometrisch abgesättigt werden. Die so gebildete insgesamt nicht (mehr) reaktive Masse entspricht in ihren Anwendungseigenschaften etwa dem bekannten Compound auf EVA-Basis, sie reagiert bei der Reinigung nicht mit dem zu entfernenden PUR-Schmelzklebstoff. Diese Compounds würden jedoch ebenfalls den Nachteil aufweisen, daß keine Absättigung der-reaktiven NCO-Gruppen des PUR-Schmelzklebstoffes erreicht wird, so daß auch hier eine Weiterreaktion des PUR-Schmelzklebstoffes noch bei der Reinigung erfolgt. Der unvernetzte PUR-Schmelzklebstoff reagiert dann wiederum zu unschmelzbaren und unlöslichen Endprodukten, deren Entfernung sehr schwierig ist.

Die Patentschrift DD-A-72964 offenbart ein Verfahren zum chemischen Abbau von Polyurethanen zur schonenden Reinigung von verunreinigten Geräten und Apparaturen, das auf einem alkoholytischen Abbau der Polyurethan zu monomeren Produkten unter Erwärmung auf Temperaturen von mehr als 160°C beruht.

Die Patentschrift DD-A-0154 446 betrifft ein wäßriges Spül- und Reinigungsmittel, bestehend aus Natriumhydrogensulfit und ein- und/oder mehrwertigen Alkoholen. Das eingesetzte Natriumhydrogensulfit bewirkt das Abblocken der Isocyanatgruppen in Wasser, wodurch die Reaktion zu hochvernetzten Produkten verhindert oder zumindest verzögert wird bzw. die Isocyanate in Wasser gelöst oder emulgiert werden.

Ein Reinigungscompound für PUR-Schmelzklebstoffe sollte folgende Anforderungen erfüllen:
- Das Reinigungscompound muß mit dem PUR-Schmelzklebstoff gut mischbar sein.
- Das Reinigungscompound muß eine weitere Reaktion des aufgenommenen unvernetzten PUR-Schmelzklebers zu Strukturen, die zur Ausbildung unschmelzbarer und im Reinigungscompound unlöslicher Produkte führen, unterdrücken.
- Das Reinigungscompound darf selbst keine unerwünschten Reaktionen bewirken.

Die bereits zitierte DD-A 72 964 lehrt ein Verfahren, mit dem sowohl unreagierte als auch anreagierte, vernetzte und verkrackte ungemischte Polyurethane alkoholytisch bei sehr hohen Temperaturen von mehr als 160°C, vorzugsweise mehr als 220°C sowie ggf. Überdruck, zu Monomeren abgebaut werden sollen. Dieses Verfahren hat keinen Bezug zu Schmelzklebstoffen und läßt sich bei deren üblichen Auftragstemperaturen (circa 110-150°C) ohne Druck nicht anwenden. Die benötigten extrem hohen Reaktionstemperaturen (und ggf. Überdruck) schließen einen Einsatz in üblichen Schmelzklebstoff-Auftragsapparaturen u.dgl. aus.

Anderer Stand der Technik gemäß DD-B 154 446, DE-A 28 19 577 und BE-A 660 955 betrifft den Einsatz wäßriger Reinigungssysteme im Sinne einer Waschflüssigkeit. Eine Reaktion des zu entfernenden, noch unreagierten Schmelzklebers mit Wasser würde das gezielte Abfangen der Isocyanatgruppen jedoch verhindern und eine solche Reaktion mit Wasser würde unschmelzbare und unlösliche Produkte hervorbringen.

Die EP-A 0 344 681 betrifft die Entfernung von Amiden und Urethanen nicht durch deren chemische Umsetzung, sondern rein physikalisch. Durch Behandlung bei 120°C mit Glycerin sollen die nicht mehr reaktiven, zu entfernenden Polymere im Alkohol geschmolzen werden und darin schwimmend aus der Apparatur ausgespült werden.

Es ist daher Aufgabe der Erfindung, Reinigungscompounds der eingangs genannten Art anzugeben, die diesen Anforderungen gerecht werden und die eingangs erwähnten Nachteile des Standes der Technik überwinden.

Zur Lösung dieser Aufgabe ist erfindungsgemäß vorgesehen, daß das Reinigungscompound, ggf. neben anderen Zusatzkomponenten, eine NCO-reaktive monohydroxyfunktionelle Verbindung als essentielle Komponente enthält. Die monohydroxyfunktionelle Verbindung des erfindungsgemäßen Reinigungscompounds sättigt die noch vorhandenen NCO-Gruppen des zu entfernenden Schmelzklebstoffes ab, und überführt diesen in nicht-reaktive, schmelzbare und im Reinigungscompound lösbare Verbindungen.

In einer weiteren bevorzugten Ausführungsform der Erfindung enthält das Reinigungscompound ein Gemisch einer insbesondere plastisch verformbaren Masse, die nicht mit dem zu entfernenden PUR-Schmelzklebstoff reagiert, und einer monohydroxyfunktionelle Verbindung, die die verbliebenen NCO-Gruppen des PUR-Schmelzklebstoffes absättigen kann.

Vorteilhafte Ausgestaltungen sind in den Unteransprüchen definiert.

Sofern eine nicht reagierende Zusatzkomponente fehlen soll, kann die NCO-reaktive Verbindung z. B. aus Abietylalkohol bestehen.

Als nicht reagierende Masse des Reinigungscompounds wird vorzugsweise eine nicht-härtende Polyurethanverbindung verwendet. Polyolpolymere, insbesondere Polyester und Polyether, eignen sich hierfür als Ausgangsmaterial. Nach stöchiometrischer Absättigung der Hydroxylfunktionen des Polyolpolymeren z.B. mit einer monofunktionellen Isocyanatverbindung erfolgt die Zugabe einer monohydroxyfunktionellen Verbindung mit NCO-reaktiven Eigenschaften als zweite Komponente, vorzugsweise in Anteilen von 10 bis 100 Milliäquivalenten (bezogen auf 100 g Compound).

Diese NCO-reaktive monohydroxyfunktionelle Komponente sättigt beim Einsatz des Reinigungscompounds die noch vorhandenen Isocyanatgruppen des zu entfernenden Polyurethan-Schmelzklebstoffes ab und überführt ihn in ein nicht-reaktives, lösliches Endprodukt.

Alternativ kann die nicht reagierende Masse aus einem dem zu entfernenden PUR-Schmelzklebstoff entsprechenden feuchtigkeitsreaktiven Schmelzklebstoff gebildet werden, dessen NCO-Funktionalität stöchiometrisch mittels einer monohydroxyfunktionellen Verbindung abgesättigt wird. Auch hier wird zusätzlich ein Gehalt von insbesondere 10 bis 100 Milliäquivalenten (bezogen auf 100 g Compound) einer monohydroxyfunktionellen Verbindung als NCO-reaktive Komponente vorgesehen, die die NCO-Funktionalität des zu entfernenden PUR-Schmelzklebstoffes absättigt und ihn in eine nicht-reaktive, lösliche Form überführt.

Vorteilhaft sind in diesem Fall beide monohydroxyfunktionellen Verbindungen identisch, d.h. der Schmelzklebstoff wird zur Herstellung des Reinigungcompounds einfach mit einem passenden Überschuß an monofunktioneller Hydroxylverbindung umgesetzt.

Die NCO-reaktive monohydroxyfunktionelle Verbindung wird im Hinblick auf die Anwendungsbedingungen der erfindungsgemäßen Reinigungscompounds gewählt. Geeignete monohydroxyfunktionelle Verbindungen sind z.B. Abietylalkohol und einwertige Alkohole oder teilveretherte monomere oder polymere Polyole, z.B. auf PEG- oder PPG-Basis, Hydroxycarbonsäureester, Polycaprolactone u.dgl.

Da die Temperatur beim Reinigungsprozeß 130° bis 150°C beträgt, sollte der Flammpunkt entsprechend hoch sein. Andererseits werden Verbindungen mit niedrigem Molekulargewicht bevorzugt, da dadurch der Verbrauch an Substanz automatisch eingeschränkt und ein günstiges Schmelz- und Lösungsverhalten des Umsetzungsproduktes erzielt wird.

Monohydroxypolyether sind als monohydroxyfunktionelle Verbindungen besonders geeignet, da sie durchweg hohe Flammpunkte haben. Das hohe Molekulargewicht dieser Verbindungen kann jedoch nachteilig sein.

Bevorzugt wird die Verwendung von Abietylalkohol als monohydroxyfunktionelle Verbindung in Einkomponenten-Reinigungscompounds. Für aus einem Gemisch mit nicht reagierendem Träger bestehende Reinigungscompounds hat sich die Verwendung von Methylbenzylalkohol als besonders vorteilhaft erwiesen. Beide monohydroxyfunktionellen Verbindungen erfüllen die oben -genannten Anforderungen hervorragend.

Um eine vollständige Neutralisierung des feuchtigkeitsreaktiven PUR-Schmelzklebstoffes zu erreichen, wird das Reinigungscompound vorzugsweise entsprechend einem NCO : OH-Verhältnis von 1:1 zu dem zu entfernenden PUR-Schmelzklebstoff angewandt. Man kann den Gehalt an NCO-reaktiver Verbindung im Compound dabei günstigerweise so wählen, daß das gewünschte NCO:OH-Verhältnis dem Mischungsverhältnis Reinigungscompound: Schmelzkleber entspricht.

Das Reinigungscompound kann gegebenenfalls noch als zusätzliche Komponenten Harz, Weichmacher, Wachs, nicht NCO-reaktive Polymere und dergleichen enthalten, die die Viskosität und die Verarbeitungseigenschaften des Polymercompounds beeinflussen und regulieren.

Die folgenden Ausführungsbeispiele erläutern die Erfindung, ohne sie jedoch einzuschränken.

### Ausführungsbeispiel 1:

Ein Reinigungscompound wird aus Abietylalkohol entsprechend einem NCO:OH-Verhältnis von 1:1 zu dem zu entfernenden PUR-Schmelzklebstoff hergestellt, wobei der Hydroxylgehalt, die Viskosität und die Verarbeitungseigenschaften durch Zusatz von Harz, Wachs und dgl. entsprechend eingestellt werden. Als Abietylalkohol wird Abitol-E (WZ) der Firma Hercules verwendet.

### Ausführungsbeispiel 2:

Ein Reinigungscompound wird hergestellt, indem hochmolekulares Polycaprolacton mit geringem Gehalt an OH-Gruppen stöchiometrisch mit Tosylisocyanat als monofunktioneller Isocyanatverbindung umgesetzt wird, bis die freien Hydroxylgruppen des Polycaprolactons abgesättigt sind. Anschließend werden ungefähr 5% Methylbenzylalkohol als NCO-reaktive Komponente zugesetzt. Die Viskosität wird durch Harzzugabe eingestellt.

### Ausführungsbeispiel 3:

Ein Reinigungscompound wird hergestellt, indem Ipatherm^{R} S 14/176 (ein Polyurethan-Schmelzklebstoff, der noch ca. 2% NCO-Funktionalität enthält) mit Methylbenzylalkohol in ca. 5% Überschuß über die Menge hinaus versetzt wird, die nötig ist, um die noch vorhandenen NCO-Gruppen abzusättigen.

### Ausführungsbeispiel 4:

Ein Reinigungscompound wird hergestellt, indem Ipatherm^{R} S 14/138 (ein Polyurethan-Schmelzklebstoff, der noch ca. 2,5 % NCO-Funktionalität enthält) mit Triethylcitrat in ca. 12 % Überschuß über die Menge hinaus versetzt wird, die nötig ist, um die noch vorhandenen NCO-Gruppen abzusättigen.

## Patentansprüche

1. Reinigungscompound zur Entfernung von reaktiven Polyurethan (PUR)-Schmelzklebstoffen aus Herstellungs- und Verarbeitungsgeräten, -maschinen und -anlagen, insbesondere Auftragsapparaturen und dergleichen,
**dadurch gekennzeichnet**, daß das Reinigungscompound wenigstens eine reaktive, mit den Isocyanatgruppen des Schmelzklebstoffes umsetzbare monofunktionelle Hydroxyverbindung und einen Gehalt einer unter Anwendungsbedingungen mit den Isocyanatgruppen des PUR-Schmelzklebstoffes nicht reagierenden, insbesondere plastisch verformbaren, Masse sowie gegebenenfalls Zusatzkomponenten wie Harze, Wachse, Weichmacher und dergleichen umfaßt.

2. Reinigungscompound gemäß Anspruch 1,
**dadurch gekennzeichnet**, daß das Reinigungscompound als nicht reagierende Masse das stöchiometrische Umsetzungsprodukt einer hydroxyfunktionellen Polymerkomponente, insbesondere einer polymeren Polyolkomponente, mit einer geeigneten monofunktionellen Verbindung, insbesondere einer Isocyanatverbindung enthält.

3. Reinigungscompound gemäß Anspruch 1 und 2,
**dadurch gekennzeichnet**, daß das Reinigungscompound als nicht reagierende Masse das stöchiometrische Umsetzungsprodukt eines Polyurethanschmelzklebstoffs mit einer monohydroxyfunktionellen Verbindung, insbesondere mit einem Hydroxyether oder einem Alkohol, vorzugsweise Methylbenzylalkohol, enthält.

4. Reinigungscompound gemäß einem der Ansprüche 1 bis 3,
**dadurch gekennzeichnet,** daß die nicht reagierende Masse einen Polyester, einen Polyether, einen Polyetherester, ein Polyester-Polyether-Copolymeres oder dergleichen umfaßt.

5. Reinigungscompound gemäß einem der Ansprüche 1 bis 4,
**dadurch gekennzeichnet**, daß das Reinigungscompound als NCO-reaktive monohydroxyfunktionelle Verbindung eine mit dem Schmelzklebstoff zu nicht reaktiven, schmelzbaren und im Reinigungscompound lösbaren Verbindungen umsetzbare Verbindung, vorzugsweise einen Hydroxyether oder einen Alkohol, und besonders bevorzugt Methylbenzylalkohol, enthält.

6. Reinigungscompound gemäß einem der Ansprüche 1 bis 5,
**dadurch gekennzeichnet**, daß das Reinigungscompound die NCO-reaktive nomofunktionelle Hydroxyverbindung in Anteilen von 10 bis 100 m Äquivalenten, bezogen auf 100 g Compound, enthält.

7. Verfahren zur Entfernung von reaktiven Polyurethan (PUR)-Schmelzklebstoffen aus Herstellungs- und Verarbeitungsgeräten, -maschinen und -anlagen, insbesondere Auftragsapparaturen und dergleichen, bei dem diese mit dem Reinigungscompound gemäß einem der Ansprüch 1 bis 6 umgesetzt werden.

8. Verwendung des Reinigungscompounds gemäß einem der Ansprüche 1 bis 6 zur Entfernung von reaktiven Polyurethan (PUR)-Schmelzklebstoffen aus Herstellungs- und Verarbeitungsgeräten, -maschinen und -anlagen, insbesondere Auftragsapparaturen und dergleichen.

9. Verfahren zur Entfernung von reaktiven Polyurethan (PUR)-Schmelzklebstoffen aus Herstellungs- und Verarbeitungsgeräten, -maschinen und -anlagen, insbesondere Auftragsapparaturen und dergleichen,
**dadurch gekennzeichnet**, daß der Schmelzklebstoff so mit einem Reinigungscompound behandelt wird, welches eine NCO-reaktive monohydroxyfunktionelle Verbindung enthält, daß verbliebene Isocyanatgruppen des Schmelzstoffes durch die NCO-reaktive Verbindung abgesättigt werden.

10. Verfahren gemäß Anspruch 9,
**dadurch gekennzeichnet,** daß das Reinigungscompound als NCO-reaktive monohydroxyfunktionelle Verbindung eine polymere Polyol- oder Hydroxyetherkomponente enthält.

11. Verfahren gemäß Anspruch 10,
**dadurch gekennzeichnet**, daß das Reinigungscompound als NCO-reaktive monohydroxyfunktionelle Verbindung eine mit dem zu entfernenden PUR-Schmelzklebstoff zu nicht reaktiven, schmelzbaren und im Reinigungscompound lösbaren Verbindungen umsetzbare Verbindung, vorzugsweise Abietylalkohol, enthält.

12. Verfahren gemäß einem der Ansprüche 9 bis 11,
**dadurch gekennzeichnet**, daß das Reinigungscompound die NCO-reaktive monofunktionelle Hydroxyverbindung in Anteilen von 10 bis 100 m Äquivalenten, bezogen auf 100 g Compound, enthält.

13. Verwendung eines Reinigungscompounds mit wenigstens einer reaktiven, mit den Isocyanatgruppen des Schmelzklebstoffes zur Bildung nicht reaktiver löslicher Produkte umsetzbaren monofunktionellen Hydroxyverbindung sowie gegebenenfalls Zusatzkomponenten wie Harze, Wachse, Weichmacher und dergleichen zur Entfernung von reaktiven Polyurethan (PUR)-Schmelzklebstoffen aus Herstellungs- und Verarbeitungsgeräten, -maschinen und -anlagen, insbesondere Auftragsapparaturen und dergleichen.

14. Verwendung gemäß Anspruch 13,
**dadurch gekennzeichnet**, daß das Reinigungscompound als NCO-reaktive monohydroxyfunktionelle Verbindung eine polymere Polyol- oder Hydroxyetherkomponente enthält.

15. Verwendung gemäß Anspruch 14,
**dadurch gekennzeichnet,** daß das Reinigungscompound als NCO-reaktive monohydroxyfunktionelle Verbindung eine mit dem zu entfernenden PUR-Schmelzklebstoff zu nicht-reaktiven, schmelzbaren und im Reinigungscompound lösbaren Verbindungen umsetzbare Verbindung, vorzugsweise Abietylalkohol, enthält.

16. Verwendung gemäß einem der Ansprüche 13 bis 15,
**dadurch gekennzeichnet,** daß das Reinigungscompound die NCO-reaktive monofunktionelle Hydroxyverbindung in Anteilen von 10 bis 100 m Äquivalenten, bezogen auf 100 g Compound, enthält.

## Claims

1. Cleaning compound for removing reactive polyurethane (PUR) hot-melt adhesives from manufacturing and processing devices, machines and installations, more particularly coating and similar equipment,
characterised in that the cleaning compound comprises at least one reactive mono-functional hydroxy compound, which is convertible with the isocyanate groups of the hot-melt type adhesive, and a content of a, more particularly, ductile, mass which does not react under application conditions with the isocyanate groups of the PUR hot-melt adhesive as well as, if necessary, additional components such as resins, waxes, softening agents or the like.

2. Cleaning compound according to claim 1,
characterised in that the cleaning compound as a non-reactive mass contains the stoichiometric product of conversion of a hydroxy functional polymer component, more particularly a polymer polyol component with a suitable mono-functional compound, more particularly an isocyanate compound.

3. Cleaning compound according to claims 1 and 2,
characterised in that the cleaning compound as a non-reactive mass contains the stoichiometric product of conversion of a polyurethane hot-melt adhesive with a monohydroxy-functional compound, more particularly with a hydroxy ether or an alcohol, preferably methyl benzyl alcohol.

4. Cleaning compound according to any one of claims 1 to 3,
characterised in that the non-reactive mass contains a polyester, a polyether, a polyether ester, polyester-polyether copolymer or the like.

5. Cleaning compound according to any one of claims 1 to 4, characterised in that the cleaning compound as an NCO-reactive monohydroxy-functional compound contains a compound which can be converted with the hot-melt adhesive to non-reactive, meltable compounds which are soluble in the cleaning compound, said compound preferably being a hydroxy ether or an alcohol, most preferably methyl benzyl alcohol.

6. Cleaning compound according to any one of claims 1 to 5, characterised that the cleaning compound contains the NCO-reactive monofunctional hydroxy compound in proportions of 10 to 100 m equivalents related to 100 g of compound.

7. Method of removing reactive polyurethane (PUR) hot-melt adhesives from manufacturing and processing devices, machines and installations, more particularly coating and similar equipment, wherein they are converted with the cleaning compound in accordance with one of claims 1 to 6.

8. Use of the cleaning compound in accordance with any one of claims 1 to 6 for removing reactive polyurethane (PUR) hot-melt adhesives from manufacturing and processing devices, machines and installations, more particularly coating and similar equipment.

9. Method of removing reactive polyurethane (PUR) hot-melt adhesives from manufacturing and processing devices, machines and installations, more particularly coating and similar machines,
characterised in that the hot-melt adhesive is treated in such a way with a cleaning compound containing an NCO-reactive monohydroxy functional compound, that residual isocyanate groups of the hot-melt adhesive are saturated off by virtue of the NCO-reactive compound.

10. Method according to claim 9,
characterised in that the cleaning compound as an NCO-reactive monohydroxy functional compound contains a polymer polyol or hydroxy ether component.

11. Method according to claim 10,
characterised in that the cleaning compound as an NCO-reactive monohydroxy functional compound contains a compound, preferably abiethyl alcohol, which can be converted with the PUR hot-melt adhesive to be removed into non-reactive, meltable compounds which are soluble in the cleaning compound.

12. Method according to any one of claims 9 to 11,
characterised in that the cleaning compound contains the NCO-reactive mono-functional hydroxy compound in proportions of 10 to 100 m equivalents related to 100g of compound.

13. Use of a cleaning compound with at least one reactive mono-functional hydroxy compound which is convertible with the isocyanate groups of the hot-melt adhesive
to form non-reactive soluble products as well as, if necessary, additional components such as resins, waxes, softening agents and the like for removing reactive polyurethane (PUR) hot-melt adhesives from manufacturing and processing devices, machines and installations, more particularly coating and similar equipment.

14. Use according to claim 13,
characterised in that the cleaning compound as an NCO -reactive monohydroxy-functional compound contains a polymer or polyol or hydroxyether component.

15. Use according to claim 14,
characterised in that the cleaning compound as an NCO-reactive monohydroxy-functional compound contains a compound, preferably abiethyl alcohol, which can be converted with the PUR hot-melt adhesive to be removed into non-reactive, meltable compounds which are soluble in the cleaning compound.

16. Use according to any one of claims 13 to 15,
characterised in that the cleaning compound contains the NCO-reactive mono-functional hydroxy compound in proportions of 10 to 100 m equivalents related to 100 g of compound.

## Revendications

1. Composition de nettoyage pour l'enlèvement de colles à fusion réactives de polyuréthane (PUR) sur les appareils, machines et installations de production et de traitement, en particulier sur les appareils d'application et similaires, caractérisée en ce que la composition de nettoyage comprend au moins une liaison hydroxyle monofonctionnelle susceptible de réagir avec les groupements isocyanate de la colle à fusion, et une certaine quantité d'une masse, en particulier apte à la déformation plastique, qui ne réagit pas, dans certaines conditions d'utilisation, avec les groupements isocyanate de la colle à fusion de PUR, ainsi que des constituants supplémentaires éventuels tels que des résines, des cires, des adoucissants ou similaires.

2. Composition de nettoyage selon la revendication 1, caractérisée en ce que la composition de nettoyage contient, en tant que masse non réactive, le produit de réaction stoechiométrique d'un constituant polymère à fonction hydroxyle, en particulier un constituant polymère de polyol, avec une liaison monofonctionnelle appropriée, en particulier une liaison isocyanate.

3. Composition de nettoyage selon l'une ou l'autre des revendications 1 et 2, caractérisée en ce que la composition de nettoyage contient, en tant que masse non réactive, le produit de réaction stoechiométrique d'une colle à fusion de polyuréthane avec une liaison hydroxyle monofonctionnelle, en particulier un éther hydroxyle ou un alcool, de préférence un alcool de méthyle benzyle.

4. Composition de nettoyage selon l'une quelconque des revendications 1 à 3, caractérisée en ce que la masse non réactive comprend un polyester, un polyéther, un ester de polyéther, un copolymère de polyester et de polyéther, où similaires.

5. Composition de nettoyage selon l'une quelconque des revendications 1 à 4, caractérisée en ce que la composition de nettoyage comprend, en tant que liaison hydroxyle monofonctionnelle réagissant avec le groupement NCO, une liaison pouvant réagir avec la colle à fusion pour donner des liaisons non réactives, fusibles, et solubles dans la composition de nettoyage, de préférence un éther hydroxyle ou un alcool, et de préférence encore un alcool de méthyle benzyle.

6. Composition de nettoyage selon l'une quelconque des revendications 1 à 5, caractérisée en ce que la liaison hydroxyle monofonctionnelle réagissant avec le groupement NCO est présente dans la composition de nettoyage dans une proportion de 10 à 100 milli-équivalents pour 100 g de composition.

7. Procédé pour l'enlèvement de colles à fusion réactives de polyuréthane (PUR) sur les appareils, machines et installations de production et de traitement, en particulier sur les appareils d'application et similaires, dans lequel lesdites colles peuvent être transformées par la composition de nettoyage selon l'une quelconque des revendications 1 à 6.

8. Utilisation de la composition de nettoyage selon l'une quelconque des revendications 1 à 6 pour l'enlèvement de colles à fusion réactives de polyuréthane (PUR) sur les appareils, machines et installations de production et de traitement, en particulier sur les appareils d'application et similaires.

9. Procédé pour l'enlèvement de colles à fusion réactives de polyuréthane (PUR) sur les appareils, machines et installations de production et de traitement, en particulier sur les appareils d'application et similaires, caractérisé en ce que la colle est traitée avec une composition de nettoyage qui comprend une liaison hydroxyle monofonctionnelle réagissant avec le groupement NCO, de telle sorte que les groupes isocyanate de la colle à fusion restants se trouvent saturés par la liaison réagissant avec le groupement NCO.

10. Procédé selon la revendication 9, caractérisé en ce que la composition de nettoyage comprend, en tant que liaison hydroxyle monofonctionnelle réagissant avec le groupement NCO, un constituant polymère de polyol ou d'éther hydroxyle.

11. Procédé selon la revendication 10, caractérisé en ce que la composition de nettoyage comprend, en tant que liaison hydroxyle monofonctionnelle réagissant avec le groupement NCO, une liaison pouvant réagir avec la colle à fusion de polyuréthane (PUR) à enlever, pour donner des liaisons non réactives, fusibles, et solubles dans la composition de nettoyage, de préférence un alcool d'abiétyle.

12. Procédé selon l'une quelconque des revendications 9 à 11, caractérisé en ce que la liaison hydroxyle mono fonctionnelle réagissant avec le groupement NCO est présente dans la composition de nettoyage dans une proportion de 10 à 100 milli-équivalents pour 100 g de composition.

13. Utilisation d'une composition de nettoyage comprenant au moins une liaison hydroxyle monofonctionnelle réagissant avec les groupements isocyanate de la colle à fusion pour former des produits solubles non réactifs, ainsi que, le cas échéant, des constituants supplémentaires tels que des résines, des cires, des adoucissants ou similaires, pour l'enlèvement de colles à fusion réactives de polyuréthane (PUR) sur les appareils, machines et installations de production et de traitement, en particulier sur les appareils d'application et similaires.

14. Utilisation selon la revendication 13, caractérisée en ce que la composition de nettoyage comprend, en tant que liaison hydroxyle monofonctionnelle réagissant avec le groupement NCO, un constituant polymère de polyol ou d'éther hydroxyle.

15. Utilisation selon la revendication 14, caractérisée en ce que la composition de nettoyage comprend, en tant que liaison hydroxyle monofonctionnelle réagissant avec le groupement NCO, une liaison pouvant réagir avec la colle à fusion de polyuréthane (PUR) à enlever, pour donner des liaisons non réactives, fusibles, et solubles dans la composition de nettoyage, de préférence un alcool d'abiétyle.

16. Utilisation selon l'une quelconque des revendications 13 à 15, caractérisée en ce que la liaison hydroxyle monofonctionnelle réagissant avec le groupement NCO est présente dans la composition de nettoyage dans une proportion de 10 à 100 milli-équivalents pour 100 g de composition.
